# EUROPEAN PATENT APPLICATION

(11) **EP 4 632 522 A1**
(43) Date of publication of application: **15.10.2025**
(21) Application number: 24169908.1
(22) Date of filing: 12.04.2024
(51) Int. Cl.: G05D 16/00

(54) **DOWNSTREAM PRESSURE CONTROL**

(71) Applicant: VAT Holding AG, 9469 Haag (CH)
(72) Inventor: REYERO SANTIAGO, Pedro, 9470 Buchs (CH); ERNST, Preston, 9435 Heerbrugg (CH); MAYRHOFER, Dominic, 9000 St. Gallen (CH)
(74) Representative: Kaminski Harmann

(57) **Abstract**

Method for providing controlling parameters for controlling a vacuum valve (10) to control the pressure in a process chamber (1) by means of the vacuum valve (10), wherein the method comprises performing a valve calibration step by providing a calibration chamber having an upstream gas inlet and the vacuum valve to control a downstream gas outlet flow, providing defined gas flow into the calibration chamber, running a valve calibrating cycle with defined variation of a valve position of a valve closure of the vacuum valve, measuring a chamber pressure in the calibration chamber, modelling a controlling behavior for the vacuum valve based on the measured chamber pressure and the related variation of the valve position and deriving respective calibration controlling parameters for the vacuum valve based on the controlling behavior. The method comprises performing a process calibration step by providing a process chamber comprising at least an upstream gas inlet and the vacuum valve to control a downstream gas outlet flow, measuring an actual pressure in the process chamber, performing a pre-process step with the process chamber (1) with given process target pressure and given process timing, controlling the actual pressure in the process chamber by means of the vacuum valve to provide the process target pressure with the process timing and deriving process controlling parameters based on the controlling. Further, the process controlling parameters and/or the calibration controlling parameters are provided to control a process cycle.

## Description

### FIELD OF INVENTION

The invention relates to a method and controller which provide improved pressure control for a process cycle of a vacuum application.

### BACKGROUND OF THE INVENTION

In general, vacuum valves for regulating a volume or mass flow and for substantially gas-tight closure of a flow path, which leads through an opening formed in a valve housing are known in various embodiments from the prior art and are used in particular in vacuum chamber systems in the area of IC, semiconductor or substrate fabrication which must take place in a protected atmosphere as far as possible without the presence of contaminating particles.

Such vacuum chamber systems comprise in particular at least one evacuatable vacuum chamber for receiving semiconductor elements or substrates to be processed or fabricated, which has at least one vacuum chamber opening, through which the semiconductor elements or other substrates can be guided into and out of the vacuum chamber as well as at least one vacuum pump for evacuating the vacuum chamber. For example, in a production plant for semiconductor wafers or liquid crystal substrates, highly sensitive semiconductor or liquid crystal elements run sequentially through a plurality of process vacuum chambers in which the parts located inside the process vacuum chambers are processed by means of a processing device in each case. Both during the processing process inside the process vacuum chambers and also during transport from chamber to chamber the highly sensitive semiconductor elements or substrates must always be located in a protected atmosphere - in particular in an air-free environment.

On the one hand, peripheral valves for opening and closing a gas supply or discharge and, on the other hand, transfer valves for opening and closing the transfer openings of the vacuum chambers are used for the purpose of introducing and removing the parts.

The type of vacuum valves through which semiconductor parts are passed are designated as vacuum transfer valves.

Peripheral valves are used in particular for controlling or regulating the gas flow between a vacuum chamber and a vacuum pump or another vacuum chamber.

Peripheral valves are located for example inside a pipe system between a process vacuum chamber or a transfer chamber and a vacuum pump, the atmosphere or another process vacuum chamber. The opening cross-section of such valves, also known as pump valves, is usually smaller than in the case of a vacuum transfer valve. Since peripheral valves are used depending on the area of application not only for complete opening and closing of an opening but also for controlling or regulating a flow through continuous adjustment of the opening cross-section between a complete open position and a gas-tight closed position, they are also designated as regulating valves. A possible peripheral valve for controlling or regulating the gas flow is the pendulum valve.

In a typical pendulum valve such as is known for example from US 6,089,537 (Olmsted), in a first step a usually round valve disk is pivoted rotatably over an opening which is also usually round from a position which exposes the opening into an intermediate position which covers the opening. In the case of a slide valve such as is described in US 6,416,037 (Geiser) or US 6,056,266 (Blecha), the valve disk and also the opening is usually configured to be rectangular and in this first step is pushed linearly from a position which exposes the opening into an intermediate position which covers the opening. In this intermediate position, the valve disk of the pendulum valve or slide valve is located in a spaced-apart opposite position to the valve seat surrounding the opening. In a second step, the distance between the valve disk and the valve seat is reduced so that the valve disk and the valve seat are pressed uniformly onto one another and the opening is closed in a substantially gastight manner. This second movement preferably takes place substantially in a perpendicular position to the valve seat.

The sealing can be accomplished, for example, either via a sealing ring arranged on the closure side of the valve disk which is pressed onto the valve seating which runs around the opening or via a sealing ring on the valve seat against which the closure side of the valve disk is pressed. As a result of the closure process which takes place in two steps, the sealing ring is barely subjected to shear forces which would destroy the sealing ring between the valve disk and the valve seat since the movement of the valve disk in the second step takes place substantially rectilinearly perpendicularly onto the valve seat.

Various sealing devices are known from the prior art, for example, from US 6,629,682 B2 (Duelli). A suitable material for sealing rings and seals in vacuum valves is, for example, fluororubber, also known as FKM, in particular, the fluoroelastomer known under the trade name "Viton" as well as perfluororubber, FFKM for short.

Since the aforementioned valves find application, inter alia, in the production of highly sensitive semiconductor elements, the generation of particles - caused, in particular, by the actuation of the valve and by the mechanical loading of the valve-shutter member - and the number of free particles in the valve chamber have to be kept as low as possible. The generation of particles is primarily a consequence of friction, for instance as a result of metal/metal contact and as a result of abrasion.

As described above, vacuum regulating valves are used for adjusting a defined process environment in a process chamber. The regulation is typically accomplished here by means of a pressure signal which provides information relating to the chamber internal pressure and by means of a target value, i.e. a desired pressure which should be achieved by means of the regulation. The position of a valve closure (valve disk) is then varied in the course of the regulation, e.g. a closed-loop regulation, so that the desired pressure is achieved within a certain time interval.

In contrast to regulation, vacuum regulating valves can also be operated in a controlled manner by means of known process parameters such as, for example, a desired pressure to be achieved in the process chamber in a predefined time. For this purpose, for example relevant desired positions for the valve disk are provided and this position is approached in likewise predefined times.

Both the above methods have their specific advantages and disadvantages. Thus, a desired pressure in the process chamber can be set in a relatively short time by means of a predefined control but as a result of a typically lacking feedback (e.g. current pressure information), a prediction on the currently prevailing pressure can only be made with reservations. Any undesired influences on the production process such as, for example a changed gas inlet or a leak of the process chamber remain completely unidentified and then typically result in a reduction in the fabrication quality.

In contrast to above, a regulation of the pressure in a process chamber is more time intensive. A feedback signal - typically produced by a pressure sensor which measures a current chamber pressure - is recorded and processed with a natural delay. A regulation based thereon is consequently made with a corresponding delay and results in a correspondingly later setting of the desired pressure. On the other hand, the regulation of the desired pressure may reliably set this even with varying gas inlets or pressure fluctuations in the process chamber. As a result of the more reliable process safety in view of the definitive chamber internal pressure, in most cases a regulation of the valve is preferably used.

However, a main disadvantage of above regulation of the chamber pressure still remains the duration until reaching a particular setpoint, e.g. nominal pressure, of the system. Moreover, reaching a particular pressure level within a given time period can hardly or not be provided for some applications.

### OBJECT OF THE INVENTION

It is therefore the object of the invention to provide an improved method of controlling or regulating a vacuum valve to avoid the above disadvantages.

In particular, it is the object of the invention to provide an improved controller which enables a regulation which provides an improved, i.e. more rapid and more reliable regulating behavior.

These objects are solved by implementing the characterizing features of the independent claims. Features which further develop the invention in alternative or advantageous manner can be deduced from the dependent patent claims.

### SUMMARY OF THE INVENTION

The invention relates to an approach of training and learning for a controller to control fluid flow in a chamber by means of a vacuum valve. The approach is directed to a two-stage learning of the controller. In a first step, the vacuum valve to be controlled and the controller are provided in calibration scenario. A calibration cycle is run to learn valve related and chamber related parameters (calibration controlling parameters) which can provide valve and chamber characteristics and related effects when actuating the valve. As for example, a valve conductance can be derived (learned) and used for controlling a particular pressure in a chamber.

In a second step, the valve is provided with a process chamber, i.e. with a chamber in which a later substrate processing should be performed. A first process-like run is performed by making use of the pre learned valve parameters. A target pressure and respective timing is provided to the controller. The pressure in the chamber is measured, accordingly. Based thereon, the controller drives the vacuum valve to provide the target pressure in the chamber with respect to the process timing. Respective controlling parameters (process controlling parameters) for the process can be derived based on that first run. The controlling parameters can be stored on the controller and can be used as feed-forward parameters for successive process runs (cycles).

An advantage of this approach is that the controller can first be trained for the particular vacuum valve, which training can be provided on customer's site, separated from a later process run. The controller learning for a particular process can later be performed in the course of the process cycle. Such learning is based on the pre-trained controlling parameters and, thus, can provide comparatively quick and high-quality on-process controller learning. Performing of only one single process run can be sufficient to meet desired controlling quality.

After such learning successive processing cycles can be controlled by directly feeding forward the learned controlling parameters according to related timing of particular processing steps or sequences.

Accordingly, the invention relates to a method for providing controlling parameters for controlling a vacuum valve to control the pressure in a process chamber by means of the vacuum valve.

The method comprises performing a valve calibration step by providing a calibration chamber having an upstream gas inlet and the vacuum valve to control a downstream gas outlet flow, providing a defined gas flow into or through the calibration chamber and running a valve calibrating cycle with defined variation of a valve position of a valve closure of the vacuum valve.

In the course of running the valve calibration step a chamber pressure is measured in the calibration chamber, a controlling behavior for the vacuum valve is modelled based on the measured chamber pressure and the related variation of the valve position and respective calibration controlling parameters are derived for the vacuum valve based on the controlling behavior.

Further, a process calibration step is performed by providing a process chamber comprising at least an upstream gas inlet and the vacuum valve to control a downstream gas outlet flow. The provided vacuum valve corresponds to the pre-calibrated vacuum valve according to valve calibration step. The process chamber is preferably considered to be the chamber in which the successive (real) substrate processing is performed and respective process cycles are applied.

The process calibration step also comprises measuring an actual pressure in the process chamber, performing a pre-process step with the process chamber with given process target pressure and given process timing and controlling the actual pressure in the process chamber by means of the vacuum valve to provide the process target pressure with the process timing.

Based thereon, process controlling parameters are derived and the process controlling parameters and/or the calibration controlling parameters are provided to control a (successive) process cycle.

In one embodiment, the process controlling parameters can be provided as feed-forward parameters to be provided for controlling the vacuum valve. By that, the process control can be improved to more efficiently, i.e. faster, adjust the pressure in the chamber. As for example, valve positions that are set and/or learned when running the process calibration step can be forwarded to provide suitable valve properties for further processing cycles based on the valve positions.

In the present context, a valve position is considered to be a position of the valve closure (valve disk) relative to the valve seat, i.e. is directly related to an opening state of the valve.

In one embodiment, a timing information related to the process timing can be assigned to the feed-forward parameters to provide the feed-forward parameters in accordance with the course to the process cycle. As a result, the respective feed-forward information can be provided, processed or retrieved in accordance with the related process step such that particular pressure levels can be provided over the whole processing cycle, e.g. step-by-step pressure adjustment.

According to one embodiment, the process calibration step can be performed for a number of iterations and the process controlling parameters can be derived and updated with each iteration. Such process can result in further improvement of the controller by deriving more precise and process-adjusted parameters.

In particular, controller gains can be derived based on the controlling of the vacuum valve and the controller gains can be updated with each iteration of the process calibration step. The process controlling parameters can respectively comprise the updated controller gains. The gains can accordingly be fed-forward for controlling the valve.

In one embodiment, a pressure error can be determined and monitored based on the measured actual pressure and the process target pressure. A set of target valve positions can be derived for the process cycle based on the pressure error. The process controlling parameters can respectively comprise the target valve positions.

In particular, the set of target valve positions can define a target trajectory for the valve position related to the course of the process cycle.

In one embodiment, a process cycle can be performed, wherein the process cycle provides the process target pressure and the given process timing, and the vacuum valve can be controlled based at least on the process controlling parameters, wherein the process controlling parameters are feed-forward by taking into account the timing information for the process cycle. In particular, the calibration controlling parameters can additionally be processed and/or fed-forward for controlling the vacuum valve.

In one embodiment, performing the valve calibration step can comprise deriving physical conditions of the calibration chamber, in particular of the vacuum valve, based on the measured chamber pressure and the related variation of the valve position. The physical conditions can comprise at least one of a chamber volume, a valve conductance, a sensor dynamics concerning at least a sensor providing measuring the chamber pressure in the calibration chamber, a communication delay concerning measuring a particular state of the calibration chamber and providing the particular state in the calibration chamber, and a time constant (concerning e.g. pressure dynamics and/or valve dynamics).

Respective physical conditions related to the process chamber can be derived based on performing the process calibration step.

In one embodiment, a controlling performance criterion can be provided which comprises at least one of a target settling time concerning a duration for reaching a particular pressure range related to the process target pressure, an occurrence of a pressure overshoot or undershoot, a target pressure error concerning a difference between the process target pressure and the measured actual pressure, a target regulation time concerning a duration for reaching the target chamber pressure, an occurrence of pressure oscillation in a steady-state, and a target pressure. A controlling performance information can be derived based on performing the process calibration step, and the process calibration step is performed until the controlling performance information corresponds with the controlling performance criterion.

The target regulation time can be related to a particular processing step and, e.g., depending on formulation can give a time required to go from 10-90% of the setpoint signal. This may comprise increasing the chamber pressure or decreasing chamber pressure.

A precision of pressure regulation can either be measured or the training process can be run until a defined precision or quality of the regulation is reached. For that, the controlling performance criterion can be e.g. a target settling, an overall regulation time or a target pressure error and the derived controlling performance information is compared to the controlling performance criterion.

In particular, the process calibration step can be performed for several iterations until the controlling performance information corresponds with the controlling performance criterion.

The controlling performance criterion allows to run the controller learning according to operator's specifications, e.g. defined iterations of a process cycle for learning or a defined time period until which controller learning should be completed, but also until a desired pressure level can be reached in acceptable time.

The invention also relates to a controller for controlling a vacuum valve to control the pressure in a process chamber by means of the vacuum valve. The controller is configured to control the vacuum valve based on processing of a given timing information and a process target pressure related to a process cycle and based on receiving an information concerning an actual pressure in the process chamber.

The controller comprises process controlling parameters for controlling the vacuum valve. The process controlling parameters are derived by performing a learning or training a method according to above. The controller is configured to feed-forward the process controlling parameters to control the vacuum valve.

The respective controlling parameters, i.e. the calibration controlling parameters and/or the process controlling parameters, can respectively be stored and updated on the controller.

When running a process cycle the respective timing information can be provided to the controller and processed by the controller. The controller can respectively be configured to apply (e.g. processing and/or feeding-forward) the controlling parameters according to the process timing.

A respective controlling signal can be derived or generated and provided (e.g. transmitted) to the vacuum valve, in particular to an actuator of the vacuum valve, to adjust the vacuum valve, i.e. the valve position. By that, an estimated or expected manipulation of the chamber pressure can be provided. Such estimated or expected manipulation of the chamber pressure can be know based on the pre-run controlling steps. Accordingly, the target pressure in the chamber can (iteratively) be approached.

In one embodiment the controller can comprise a feedback controlling routine configured to receive the information concerning the actual pressure in the process chamber, compare the information concerning the actual pressure with the process target pressure and derive a pressure deviation, derive a feedback drive command based on the pressure deviation, and apply the feedback drive command to control the vacuum valve. The controller can be configured to run the feedback controlling routine when performing or running the process cycle.

The feedback control can be implemented to provide regulation of the chamber pressure in addition to the feed-forward control. Hence, the pressure can be controlled even more precise and possible unexpected errors can be handled and compensated to efficiently reach the target pressure.

### BRIEF DESCRIPTION OF THE DRAWINGS

The apparatus according to the invention and the method according to the invention are described in detail hereinafter merely as an example with reference to specific exemplary embodiments shown schematically in the drawings, wherein further advantages of the invention are also discussed. In detail in the figures:
figure 1 schematically shows an embodiment of a controller and a vacuum valve used in a processing system according to the invention;
figure 2 schematically shows an embodiment of a method according to the invention.

### DETAILED DESCRIPTION OF THE DRAWINGS

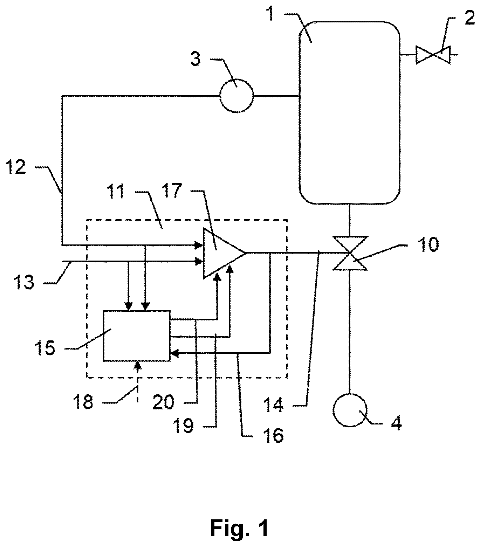

Figure 1 shows schematically an embodiment of a process system for treatment of an object under vacuum conditions. The structure has a process chamber 1 and a feed line into the process chamber (upstream), said feed line being provided with a gas-flow meter or mass flow controller 2 with which a defined quantity of a particular fluid, e.g. process gas or precursor gas, that is flowing into the process chamber can be measured or the inflowing quantity of gas can be regulated appropriately. Furthermore, a pressure sensor 3 is provided which permits a determination of the pressure in the interior of the process chamber 1 (chamber pressure).

On an outlet side of the process chamber 1 a vacuum pump 4 is connected to the chamber 1 for evacuation thereof. A regulation vacuum valve 10 for controlling or regulating the outflowing mass flow is arranged between the vacuum pump 4 and the chamber 1 (downstream). The (controlled) setting of the valve 10 may in this case be realized, for example, by means of a motorized, pneumatic or hydraulic drive of the valve.

In accordance with the invention the system has a controller 11 (controlling unit) which is connected to the valve 10 and provides a regulated triggering of the valve 10 by means of controlling signals on the basis of an appropriate input variable 12, i.e. an information concerning an actual pressure in the process chamber 1, and a nominal variable 13, e.g. a given timing information and/or a process target pressure.

In the embodiment shown, a current pressure signal 12 of the pressure sensor 3 is continually obtained, with which a current pressure state in the process chamber 1 is known or provided. In addition, by way of nominal or target variable 13 a nominal pressure or a nominal-pressure profile for a respective process cycle is provided to the control unit 11. On the basis of these input variables, a controlling signal 14 is generated by the control unit 11 and output to the motorized valve 10.

For the purpose of setting a desired internal pressure in the process chamber 1, within the scope of a control cycle the valve opening of the vacuum valve 10 is accordingly varied in such a way that an outflow of gas out of the process chamber occurs in such a way that the current internal pressure can be approximated to a target pressure. For instance, in a first time-interval of a treatment process (process cycle) the valve opening is set relatively wide open, in order that a lowering of the internal pressure that is as fast as possible occurs, and in the further course of the control the valve opening is set less wide open, in order that in a later time-interval the desired internal pressure can be set and maintained by a regulated outflow of a smaller quantity of gas per unit of time, in the course of which, in particular, a laminar or molecular gas flow or alternatively also a hybrid of both is present.

The controller 11 comprises a PID controlling unit 17 which receives the actual chamber pressure 12 and the target chamber pressure 13.

For providing controlling according to this embodiment, the actual chamber pressure 12 and a target chamber pressure 13 are also provided to a processing unit 15 of the controller.

Although the processing unit 15 and the PID controlling unit 17 here are shown as two separated units, it should be understood that both units 15,17 may alternatively be implemented as a common unit or processor or may be implemented as respective algorithms.

The processing unit 15 also receives an information concerning a valve position 16. The information concerning the valve position may be generated on side of the valve, e.g. on side of the driving unit of the valve, e.g. by an encoding unit or a position sensor. Further, a timing information 18 is provided to the processing unit 15. The timing information may be externally provided, e.g. by means of a higher-level control, or may be stored and/or tracked by means of the controller. The timing information preferably provides information about a progress of a process (cycle) or about a particular process step and/or a duration for such a step.

The timing information 18 is preferably related to a particular target pressure which should be achieved in a particular point in time. Further, the timing information 18 may provide timing of the pressure over a period, i.e. may define a particular pressure trajectory.

The processing unit 15 generates and provides respective controlling parameters 19 to the PID controlling unit 17. These controlling parameters 19 may comprise calibration controlling parameters which describe a behavior of the vacuum valve 10, e.g. a relationship between a valve position and an (estimated) valve conductance, physical conditions of the valve, a process model or a model-based controller.

In an alternative embodiment, the calibration controlling parameters may directly be stored on the PID controlling unit 17.

In one embodiment, the processing unit 15 may provide one-time calculation of the calibration controlling parameters during a respective calibration step. Afterwards, the calibration controlling parameters are stored in the PID controlling unit 17.

As mentioned, the PID controlling unit 17 receives the actual chamber pressure 12 and a target chamber pressure 13 and calculates a controlling signal 14. Such calculation is at least based on the calibration controlling parameters which are derived for the vacuum valve 10.

Further, based on the received process data, i.e. the actual chamber pressure 12, the target chamber pressure 13, the valve position 16 and the timing information 18, the processing unit 15 generates and provides process controlling parameters 20 which are fed forward to the PID controlling unit 17. The process controlling parameters 20 may preferably comprise a feed-forward position related to the valve position. The fed forward process controlling parameters 20 can preferably be provided depending on a particular timing information.

In one embodiment, the feed-forward position may comprise a particular position for the valve related to defined instant of a process cycle.

Alternatively, the process controlling parameters 20 can comprise a series of feed-forward positions related to the valve position. Such a series can provide feed-forward information of an entire valve trajectory for a process cycle.

Hence, the PID controlling unit 17 also receives the process controlling parameters 20 and processes the process the controlling parameters 20 in the course of calculating the controlling signal 14.

The controlling parameters 19 (PID controlling parameters) can be derived based on running a learning sequence with an initial (standard) adaptive controller. The controller can be a PID controller. For that, the controller can be set up to provide controlling of the vacuum valve 10. The setup is preferably designed as a calibration setup with a calibration chamber and the vacuum valve, i.e. valve and controller are initially trained outside process conditions.

A respective learning process can be performed by applying defined or constant flow of a defined calibration fluid (e.g. argon or nitrogen). A defined variation of a valve position of a valve closure of the vacuum valve is performed during the valve calibrating cycle while an actual pressure is measured. The position information and the pressure information are both provided to the controller.

Based on such calibration cycle, the controlling parameters 19 (calibration controlling parameters) can be calculated. The calibration controlling parameters may accordingly provide information about the characteristics of the vacuum valve and an estimated pressure behavior as a function of a variation of the valve position.

The feed forward controlling parameters, i.e. the process controlling parameters 20, can be derived based on performing a further learning sequence under process conditions based on the pre-learned calibration controlling parameters 19. Such process learning comprises to provide the vacuum valve in process conditions, in particular including a process chamber and a respective fluid inlet and fluid outlet, and to run a process cycle. Additionally, chamber pressure and timing information of the process cycle is provided to the controller. As a result, a target pressure and related timing for reaching that pressure can be processed on side of the controller. The controller is run to drive the vacuum valve to reach the target pressure.

Based on such learning run respective valve positions in relation to e.g. estimated flow conditions of the process can be derived. By also considering the timing information (and e.g. also the related target pressure) respective valve positions for the vacuum valve can be derived which can be stored and applied to the controller as feed forward positions (process controlling parameters 20).

In other words: such learning can provide to enable the controller to process feed-forward position information for one or multiple points in time in the course of the process cycle. This results to more precise and even faster regulation of particular target pressures.

Based on processing at least the calibration controlling parameters 19 and the process controlling parameters 20 the controller provides the controlling signal 14 to manipulate the position of the vacuum valve closure, i.e. to drive the vacuum valve.

One advantage of the controller training described above is the resulting flexibility of the controller. The respective vacuum valve 10 can be pre-calibrated and respective calibration controlling parameters can be provided for the valve. In addition, the training on the process can be provided at the customer site by performing even only one single or multiple process cycles. The process controlling parameters 20 can directly be derived based on one single training cycle. Hence, the valve and process control can be provided with comparatively high precision, high speed and with low training effort.

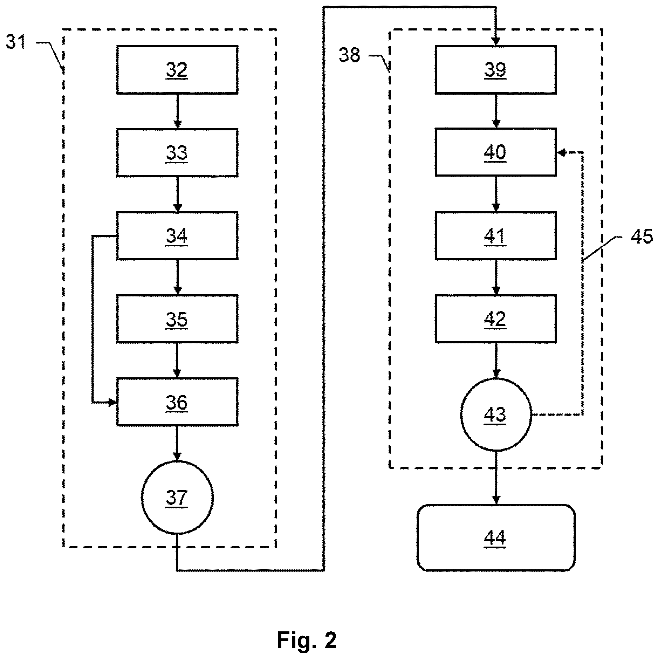

Figure 2 shows an embodiment of a method for providing controlling parameters for controlling a vacuum valve to control the pressure in a vacuum chamber by means of the vacuum valve.

The method comprises a valve calibration step 31 which is performed for deriving calibration controlling parameters. The calibration controlling parameters are derived to describe a behavior of the vacuum valve to be controlled, e.g. a relationship between a valve position and an (estimated) valve conductance, physical conditions of the valve, a process model or a model-based controller.

The valve calibration step comprises a step 32 to provide the vacuum valve with a calibration chamber. The chamber comprises a fluid inlet and a fluid outlet. A defined fluid flow through the chamber is provided 33. Given such configuration, a respective calibration cycle can be run 34 by means of the vacuum valve. The calibration cycle can, as for example, comprise a defined variation of the valve position.

In addition, the chamber pressure in the calibration chamber is measured 35.

A controlling behavior of the vacuum valve can be derived 36 based on the known variation of the valve position and the related pressure variation which are measured. The controlling behavior of the vacuum valve allows to determine the calibration controlling parameters - step 37.

The calibration controlling parameters can be stored on a controller to provide respective controlling of the vacuum valve. The stored information can be use in normal runs to control any given setpoint at unknown flow conditions. The controller may preferably be built as a (adaptive) PID controller.

The calibration controlling parameters can be adapted according to estimated process conditions.

The method also comprises a process calibration step 38 which is performed after the valve calibration step 31. The process calibration step is performed to derive process controlling parameters which are related to a particular arrangement of a processing system. The process calibration step 38 is performed to derive relevant process information by running a first cycle by use of the calibration controlling parameters.

Accordingly, a process chamber is provided 39 which comprises at least an upstream gas inlet and the (calibrated) vacuum valve to control a downstream gas outlet flow. A pre-process step is performed 40, wherein a given process target pressure and a given process timing is provided. When the pre-process step is performed, the actual pressure in the process chamber is measured 41.

Based on above information, the actual pressure in the process chamber is controlled 42 by means of the vacuum valve to provide the process target pressure with the related process timing.

Such controlling provides deriving process controlling parameters 43 based on the controlling sequence.

The derived parameters are stored in the controller 44. The sored information is then uses in normal runs as feed-forward information, in particular to replace or support components of the (adaptive) PID controller.

Such pre-process step can iteratively be run several times by applying the feed-forward parameters. By that, the controller gains can be learned or trained for the controller.

A controller gain defines a strength of the controller response experienced in relation to a deviation between the input and output signal. In a control loop, the controller gain is the strength of action a controller will take at a particular point below or above the setpoint.

The feed-forward parameters can preferably be replaced or updated after each pre-process cycle. This results in an optimized controlling behavior by process-adapted controller gains.

The pre-process step can be repeated, even during real processing of a substrate, until the controlling quality meets the requirements given by an operator (end condition), e.g. a defined settling time or pressure error. Alternatively, the pre-process step can be repeated for a defined number of times.

It is understood that the depicted figures only schematically depict possible exemplary embodiments. The various approaches can according to the invention also be combined with one another and with prior art methods and devices for pressure regulation for vacuum processes.

## Claims

1. Method for providing controlling parameters for controlling a vacuum valve (10) to control the pressure in a process chamber (1) by means of the vacuum valve (10), the method comprises
• performing a valve calibration step (31) by
□ providing a calibration chamber (32) having an upstream gas inlet and the vacuum valve to control a downstream gas outlet flow,
□ providing defined gas flow (33) into the calibration chamber,
□ running a valve calibrating cycle (34) with defined variation of a valve position of a valve closure of the vacuum valve,
□ measuring a chamber pressure (35) in the calibration chamber,
□ modelling a controlling behavior (36) for the vacuum valve based on the measured chamber pressure and the related variation of the valve position and
□ deriving respective calibration controlling parameters for the vacuum valve based on the controlling behavior (37),
• performing a process calibration step (38) by
□ providing a process chamber (39) comprising at least an upstream gas inlet and the vacuum valve to control a downstream gas outlet flow,
□ measuring an actual pressure (41) in the process chamber,
□ performing a pre-process step (40) with the process chamber (1) with given process target pressure and given process timing,
□ controlling the actual pressure in the process chamber (42) by means of the vacuum valve to provide the process target pressure with the process timing and
□ deriving process controlling parameters (43) based on the controlling, and
• providing the process controlling parameters and/or the calibration controlling parameters to control a process cycle (44).

2. Method according to claim 1, wherein
the process controlling parameters (20) are provided as feed-forward parameters to be provided for controlling the vacuum valve (10).

3. Method according to claim 2, wherein
timing information related to the process timing is assigned to the feed-forward parameters to provide the feed-forward parameters in accordance with the course to the process cycle.

4. Method according to any of the preceding claims, wherein
the process calibration step (38) is performed for a number of iterations (45) and the process controlling parameters (20) are derived and updated with each iteration.

5. Method according to claim 4, wherein
controller gains are derived based on the controlling of the vacuum valve (10) and the controller gains are updated with each iteration of the process calibration step (38), wherein the process controlling parameters comprise the updated controller gains.

6. Method according to any of the preceding claims, wherein
• a pressure error is determined and monitored based on the measured actual pressure and the process target pressure, and
• a set of target valve positions is derived for the process cycle based on the pressure error, wherein the process controlling parameters (20) comprise the target valve positions.

7. Method according to claim 6, wherein
the set of target valve positions defines a target trajectory for the valve position related to the course of the process cycle.

8. Method according to any of the preceding claims, wherein
• a process cycle is performed, wherein the process cycle provides the process target pressure and the given process timing, and
• the vacuum valve (10) is controlled based at least on the process controlling parameters (20), wherein the process controlling parameters are feed-forward by taking into account the timing information for the process cycle.

9. Method according to any of the preceding claims, wherein performing the valve calibration step (31) comprises deriving physical conditions of the calibration chamber based on the measured chamber pressure and the related variation of the valve position, wherein the physical conditions comprise at least one of
• a chamber volume,
• a valve conductance,
• a sensor dynamics concerning at least a sensor providing measuring the chamber pressure in the calibration chamber,
• a communication delay concerning measuring a particular state of the calibration chamber and providing the particular state in the calibration chamber, and
• a time constant.

10. Method according to any of the preceding claims, wherein
• a controlling performance criterion is provided which comprises at least one of
□ a target settling time concerning a duration for reaching a particular pressure range related to the process target pressure,
□ a target regulation time concerning a duration for reaching the target chamber pressure,
□ an occurrence of a pressure overshoot or undershoot,
□ an occurrence of pressure oscillation in a steady-state,
□ a target pressure error concerning a difference between the process target pressure and the measured actual pressure, and
□ a target pressure,
• a controlling performance information is derived based on performing the process calibration step (38), and
• the process calibration step (38) is performed until the controlling performance information corresponds with the controlling performance criterion.

11. Method according to claim 10, wherein
the process calibration step (38) is performed for several iterations until the controlling performance information corresponds with the controlling performance criterion.

12. Controller (11) for controlling a vacuum valve (10) to control the pressure in a process chamber (1) by means of the vacuum valve (10), wherein
the controller (11) is configured to control the vacuum valve (10) based on
• processing of a given timing information (18) and a process target pressure (13) related to a process cycle, and
• receiving an information concerning an actual pressure (12) in the process chamber,
wherein
• the controller comprises process controlling parameters (20) for controlling the vacuum valve (10), the process controlling parameters are derived by performing a method according to any of the preceding claims, and
• the controller is configured to feed-forward the process controlling parameters (20) to control the vacuum valve (10).

13. Controller (11) according to claim 12, wherein
the controller (11) comprises a feedback controlling routine configured to
• receive the information concerning the actual pressure in the process chamber,
• compare the information concerning the actual pressure with the process target pressure and derive a pressure deviation,
• derive a feedback drive command based on the pressure deviation, and
• apply the feedback drive command to control the vacuum valve,
wherein the controller is configured to run the feedback controlling routine when performing the process cycle.
